# EUROPÄISCHE PATENTANMELDUNG

(11) **EP 1 014 723 A2**
(43) Veröffentlichungstag der Anmeldung: **28.06.2000**
(21) Anmeldenummer: 99440344.2
(22) Anmeldetag: 03.12.1999
(51) Int. Cl.: H04N 7/18

(54) **Verfahren und Leitzentrale zur Videofernüberwachung von insbesondere Wohnungen und Büros**

(30) Priorität: 18.12.1998 DE 19858555
(71) Anmelder: ALCATEL, 75008 Paris (FR)
(72) Erfinder: Matt, Hans Jürgen Dr., 71686 Remseck (DE); Schneider, Gerhard, 71229 Leonberg (DE)
(74) Vertreter: Brose, Gerhard, Dipl.-Ing.

(57) **Zusammenfassung**

Die Erfindung betrifft ein Verfahren zur Videofernüberwachung von insbesondere Wohnungen und Büros, bei dem von einer Leitzentrale (C) aus zu einer Endeinrichtung (S1, S2, S3, ..., Sn), über die die Videofernüberwachung erfolgen soll, eine Videoverbindung aufgebaut wird, bei dem von der Endeinrichtung zur Leitzentrale ein Videobild übertragen wird und bei dem nach erfolgter Überwachung die Videoverbindung wieder ausgelöst wird, bei dem erfindungsgemäß der Aufbau einer Videoverbindung von der Leitzentrale aus selbständig eingeleitet wird, wenn diese aufgrund vorgegebener Regeln erkennt, daß eine Überwachung durch eine bestimmte Endeinrichtung erfolgen soll, sowie eine Leitzentrale hierfür.

## Beschreibung

Die Erfindung betrifft ein Verfahren zur Videofernüberwachung von insbesondere Wohnungen und Büros nach dem Oberbegriff des Anspruchs 1 und eine Leitzentrale dafür nach dem Oberbegriff des Anspruchs 5.

Es ist schon lange bekannt, Kaufhäuser, Läden, Fabrik- und Lagerhallen und dergleichen einer Videoüberwachung zu unterziehen. Hierfür sind dann innerhalb des jeweiligen Betriebs geeignete Videoüberwachungseinrichtungen vorgesehen, die durch ein eigens hierfür verlegtes, mehr oder weniger aufwendiges lokales Kommunikationsnetz in der Regel jeweils mit einem Monitor pro Videoüberwachungseinrichtung verbunden sind.

Insbesondere nachdem es nun geeignete Verfahren gibt, um auch Videobilder über das herkömmliche Telephonnetz zu übertragen, sind auch Videofernüberwachungsverfahren bekannt geworden, mittels derer auch aus der Ferne zuhause angerufen werden kann, um die dortige Situation im Bild zu überprüfen.

Weiter sind Videofernüberwachungseinrichtungen bekannt, die in einem Alarmfall automatisch eine Zentrale oder eine andere vorher bestimmte Einrichtung anwählen und dorthin ein Videobild übermitteln.

Auch sind Leitzentralen zur Videofernüberwachung bekannt, in denen ein Wachmann die von ihm zu überwachenden Wohnungen und Büros jeweils einzeln anwählt, um die jeweilige Situation im Bild zu überprüfen. Er handelt dabei an Stelle vieler Einzelner. Eine solche Leitzentrale kann dabei auch mit einem Bildschirmarbeitsplatz ausgerüstet sein, mit dessen Hilfe die Überwachungstätigkeit unterstützt wird. Dabei wird nicht nur das jeweils übertragene Videobild an diesem Bildschirm angezeigt, es kann auch zur Dokumentation der Überwachungstätigkeit oder bei beobachteten Unregelmäßigkeiten abgespeichert werden. Zur Kontrolle kann auch ein Vergleichsbild des zu überwachenden Objekts zur Anzeige gebracht werden. Als Hilfe bei der Auswahl steht dabei auch eine Liste oder elektronische Kartei der zu überwachenden Objekte zur Verfügung; die Anwahl erfolgt über die Tastatur oder durch einen Mausklick.

Der Erfindung liegt die Aufgabe zugrunde, ein Verfahren und eine zur Durchführung dieses Verfahrens geeignete Leitzentrale anzugeben, um möglichst viele nicht an einem separaten Kommunikationsnetz angeschlossene Videofernüberwachungseinrichtungen, insbesondere also solche in Wohnungen und Büros, mit geringem Aufwand überwachen zu können.

Diese Aufgabe wird erfindungsgemäß gelöst durch ein Verfahren nach der Lehre des Anspruchs 1 und eine Leitzentrale nach der Lehre des Anspruchs 5.

Gemäß der vorliegenden Erfindung werden demnach nach vorgegebenen Kriterien Endeinrichtungen in den zu überwachenden Räumen selbständig angewählt und von dort Videobilder in die Zentrale zur Überwachung gesendet.

Weitere Ausgestaltungen der Erfindung sind den Unteransprüchen und der nachfolgenden Beschreibung zu entnehmen.

Im folgenden wird die Erfindung unter Zuhilfenahme der beiliegenden Zeichnungen weiter erläutert:
- Figur 1: zeigt eine Anordnung, in der das erfindungsgemäße Verfahren ablaufen kann und anhand derer das erfindungsgemäße Verfahren beschrieben wird.
- Figur 2: zeigt ein erstes Ausführungsbeispiel einer erfindungsgemäßen Leitzentrale.
- Figur 3: zeigt ein zweites Ausführungsbeispiel einer erfindungsgemäßen Leitzentrale.

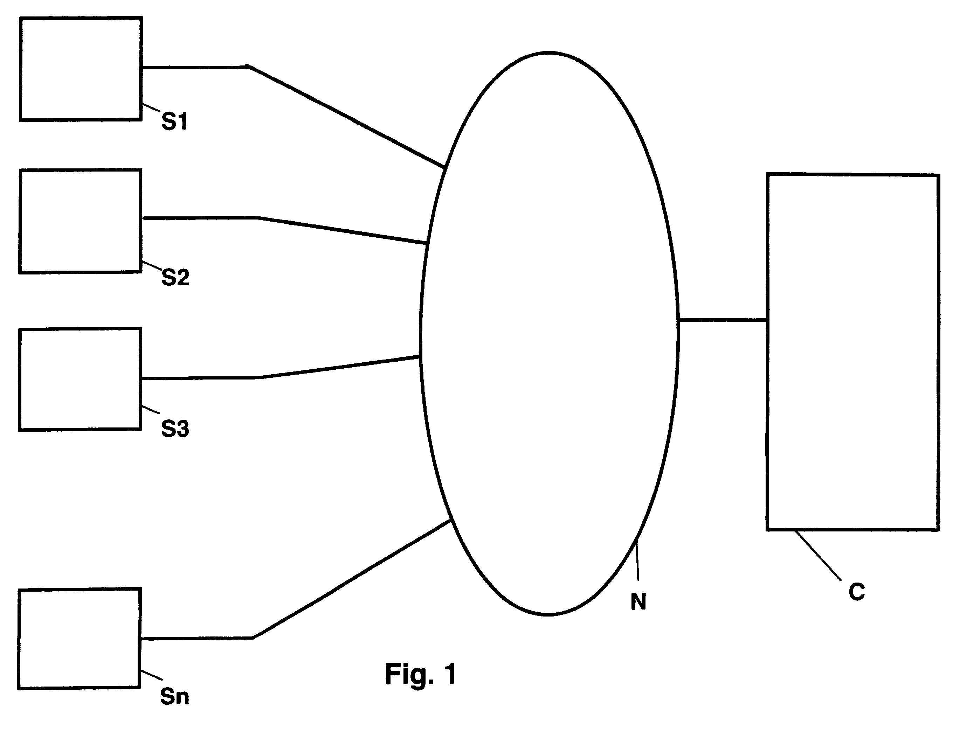

Anhand der Figur 1 wird zunächst das erfindungsgemäße Verfahren kurz beschrieben:

Figur 1 zeigt ein Nachrichten-Wählnetz N, eine Leitstelle C und eine Reihe von Teilnehmereinrichtungen S1, S2, S3, ..., Sn von Teilnehmern an der Videofernüberwachung.

Das Nachrichten-Wählnetz N ist bevorzugt das normale Telekommunikationsnetz, das aus einer Vielzahl untereinander vermaschter, teils gleichartiger und teils verschiedenartiger Teilnetze besteht. Wesentlich dabei ist, daß die Leitstelle C über dieses Wählnetz N jede der Teilnehmereinrichtungen S1, S2, S3, ..., Sn über eine solche Leitung erreichen kann, über die sonst andere Telekommunikationsverbindungen geführt werden. Besonders vorteilhaft ist es, wenn zumindest ein Großteil der zu den Teilnehmereinrichtungen S1, S2, S3, ... , Sn führenden Verbindungen als digitale Verbindungen, bevorzugt ISDN-Verbindungen, insbesondere mit sogenannten S0-Schnittstellen, ausgeführt sind. Für die Leitstelle C ist eine Anbindung an das Wählnetz N über ISDN erst recht vorteilhaft. Für die Zukunft wird auch ein Anschluß über Mobilfunk, DECT, ATM und dergleichen in Frage kommen.

Das Nachrichten-Wählnetz N kann aber auch beispielsweise das Internet sein, wo ebenfalls jeder Teilnehmer durch Angabe einer Internetadresse anwählbar ist und wo grundsätzlich auch Videoübertragungen möglich sind. Für Überwachungszwecke ist in der Regel ohnehin eine Bewegtbildübertragung nicht zwingend erforderlich.

Die Ausrüstung bei den Teilnehmern, also die jeweilige Teilnehmereinrichtung S1, S2, S3, ..., Sn, muß zwar auf das erfindungsgemäße Verfahren abgestimmt sein; derartige Ausrüstungen sind aber an sich bekannt. Im einfachsten Fall ist eine solche Ausrüstung ein Gerät nach Art eines Bildtelephons, das im übrigen auch als solches genutzt werden kann, dessen Kamera (und eventuell auch Mikrophon) aber vor allem nicht nur am Gerät selbst, sondern auch über einen vereinbarten Code (auch als oder in Zusammenhang mit einem Paßwort) über das Netz N, hier also von der Leitzentrale C aus, aktiviert werden kann. Von Vorteil ist es, wenn die Einstellung der Kamera ebenfalls vom Netz aus verändert und damit die Kamera ferngesteuert werden kann. Die Ausrüstung eines Teilnehmers kann auch mehrere Kameras und einen geeigneten fernsteuerbaren Umschalter zwischen den Kameras aufweisen. Gegebenenfalls kann auch ferngesteuert eine passende Beleuchtung zunächst eingeschaltet und dann wieder ausgeschaltet werden.

Einerseits ist es zwar für eine erfolgreiche Überwachung erforderlich, daß die zu überwachenden Räume während der Überwachung ausreichend beleuchtet sind, andererseits kann aber eine solche nur kurzfristig eingeschaltete Beleuchtung nach außen hin ein Zeichen dafür sein, daß eine Fernüberwachung gerade stattgefunden hat und nicht so bald wieder zu erwarten ist. Es bietet sich deshalb an, unabhängig von der Videofernüberwachung durch die Leitzentrale C auch noch andere Sicherheitsaufgaben durchführen zu lassen. Hierzu könnte nicht nur das ferngesteuerte, eine Nutzung der Wohnung oder des Büros nachahmende Ein- und Ausschalten von Beleuchtungen oder Öffnen und Schließen von Fensterläden gehören, sondern auch das Abfragen von Sensoren, beispielsweise für die Temperatur, um gegebenenfalls die Heizung ferngesteuert ein- oder ausschalten zu können. Solche Sensoren könnten auch zur Auslösung von Alarmen an die Leitzentrale C dienen. Besonders geeignet zur Auslösung von Alarmen sind jedoch digital arbeitende Sensoren wie Rauchmelder oder Glasbruchsensoren. Das Auslösen von Alarmen wird weiter unten noch zu besprechen sein.

Damit eine Videofernüberwachung durch die Leitzentrale C erfolgen kann, muß diese zunächst in irgendeiner Weise initiiert werden. Im einfachsten Fall kann dies aufgrund eines persönlichen Kontakts zwischen einem der Teilnehmer und einer Kontaktperson des Betreibers der Leitzentrale (eines sogenannten Service Providers) erfolgen. Dabei können alle Modalitäten, einschließlich der Zeiten, innerhalb derer zu überwachen ist, vorgegeben werden. Beginn und Ende eines Überwachungszeitraums können aber auch jeweils durch einen Anruf des Teilnehmers bestimmt werden. Grundsätzlich ist es nicht auszuschließen, ohne zeitliche Begrenzung zu überwachen.

Bevorzugt wird jedoch eine Initiierung, die zwar vom Teilnehmer selbst an seiner Ausrüstung vorgenommen werden kann, die dann jedoch automatisch abläuft. Gedacht wird an die Verwendung einer an der Teilnehmereinrichtung einsteckbaren Chipkarte, deren Entfernung die Überwachung einleitet und deren Wiedereinführen die Überwachung wieder beendet. Ein unbefugtes Stillegen der Überwachung ist damit ausgeschlossen. Diese Vorgänge können und sollen reine Datenverbindungen zur Leitzentrale hin sein; Videoverbindungen sind hierfür nicht erforderlich. Die Datenverbindung soll aber bevorzugt über dasselbe Medium erfolgen, wie sonst die Videoverbindungen, in der Regel über das normale Telephonnetz erfolgen. Der Aufbau dieser Verbindungen erfolgt jeweils von der Teilnehmereinrichtung aus zur Leitzentrale hin, nicht von der Leitzentrale aus.

Ist nun eine Überwachung initiiert, so sind damit auch Regeln vorgegeben, aufgrund derer die Überwachung durchgeführt werden soll. Hier können beispielsweise bestimmte Zeitpunkte oder bestimmte zeitliche Abstände, aber auch die Verwendung zufällig zu wählender Zeitpunkte vorgegeben sein.

Stellt die Leitzentrale aufgrund der genannten Regeln fest, daß eine Videofernüberwachung erfolgen soll, so leitet sie von sich aus selbständig den Aufbau einer hierzu geeigneten Videoverbindung ein. Gleichzeitig mit der Vollendung des Aufbaus dieser Videoverbindung werden am zugehörigen Bildschirmarbeitsplatz Daten über das zu überwachende Objekt und gegebenenfalls dessen Inhaber oder Bewohner, insbesondere Name, Anschrift und Telephonnummer, gegebenenfalls Kontaktperson, dargestellt, und Eingabefelder zur Eingabe von besonderen Beobachtungen (Befunden) geöffnet. Weitere Eingaben, die mehr oder weniger nach Art eines Logbuchs erforderlich sind, erfolgen weitestgehend automatisch.

Das über die Videoverbindung von der angewählten Teilnehmereinrichtung übertragene Videobild wird selbstverständlich ebenfalls am Bildschirmarbeitsplatz angezeigt. Gleichzeitig kann ein in einer Datenbank abgespeichertes Kontrollbild als Referenz mit angezeigt werden. Mit bekannten Verfahren ist es auch möglich, einen automatischen Vergleich des Augenblickszustands mit dem Kontrollbild durchzuführen. Ebenfalls mit bekannten Verfahren der Bildsignalverarbeitung kann nach einer Bewegung im übertragenen Videobild gesucht werden. Bereiche mit Änderungen oder mit einer festgestellten Bewegung können entweder automatisch markiert oder in einem separaten Bild angezeigt werden. Dem Bediener kann dann auch (durch ein geeignetes Feld) angeboten werden, auf eine Eingabe hin die Kamera per automatisch gesteuerter Fernbedienung auf diesen Bereich zu richten. Vom Bildschirmarbeitsplatz aus können auch per Fernbedienung in der fernen Teilnehmereinrichtungen Parameter eingestellt werden, deren Erreichen oder Überschreiten später einen Alarm auslösen soll. So kann beispielsweise für den oben genannten Bereich eine Bewegungsdetektion eingestellt werden, wobei sowohl für die Intensität der Bildänderung als auch für die Änderungsgeschwindigkeit Schwellwerte vorgegeben werden können.

Auch die gleichzeitige Wiedergabe des akustischen Geschehens am zu überwachenden Ort ist mit bekannten Verfahren problemlos möglich. Die Technik der Teilnehmereinrichtung hierfür braucht nicht von der Technik üblicher Bildtelephone abzuweichen. Aus verschiedenen Gründen, beispielsweise wegen der o.g. Bildverarbeitung, kann es sinnvoll sein, wenn das Videosignal in einem vom üblichen TV-Format abweichenden Format vorliegt und möglicherweise auch in diesem anderen Format übertragen wird. Hierzu wird nur beispielsweise auf bekannte Bildkompressionsverfahren wie die nach dem JPEG-Standard oder dem MPEG-Standard sowie die Standards der H-Reihe der ITU-T, insbesondere H.320 ff. verwiesen. Der JPEG-Standard wurde von der Joint Photographic Expert Group der International Standardization Organization (ISO) für eine effiziente Speicherung von Einzelbildern entwickelt; der MPEG-Standard wurde von der Moving Pictures Expert Group derselben Organisation ursprünglich für die Speicherung von Videos auf CD-ROM entwickelt. Die Standards der H-Reihe der ITU-T berücksichtigen die bei der Übertragung auftretenden Gesichtspunkte.

Im Anschluß an eine erfolgte Videofernüberwachung wird die Verbindung von der Leitzentrale aus beendet. Der benutzte Bildschirmarbeitsplatz ist damit frei für die nächste Videofernüberwachung, in der Regel für einen anderen Teilnehmer, oder eine beliebige andere Aufgabe, beispielsweise im Rahmen eines sogenannten Call-Centers.

Die erfindungsgemäße Leitzentrale mit ihren Bildschirmarbeitsplätzen ist bestens dafür geeignet, nicht nur routinemäßige Kontrollen durchzuführen, sondern auch im Falle eines Alarms aktiv zu werden. Nun ist jedoch nicht vorgesehen, daß im Alarmfall die alarmierende Teilnehmereinrichtung eine Videoverbindung zur Leitzentrale aufbaut, um von dort eingesehen zu werden. Es soll vielmehr von der alarmierenden Teilnehmereinrichtung aus wieder nur eine Datenverbindung, wie sie oben zur Initiierung beschrieben wurde, zur Leitzentrale aufgebaut und darüber diese alarmiert und zum sofortigen Aufbau einer Videoverbindung aufgefordert werden.

Abschließend werden noch zwei Ausführungsbeispiele erfindungsgemäßer Leitzentralen beschrieben:

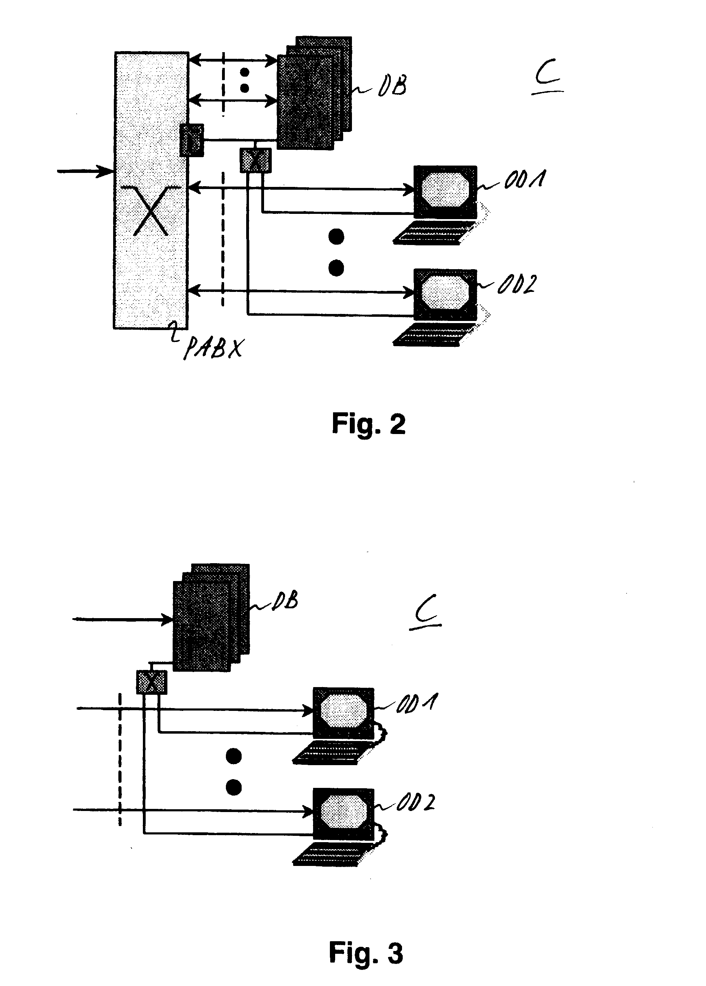

Ein erstes Ausführungsbeispiel einer erfindungsgemäßen Leitzentrale wird anhand der Figur 2 beschrieben. Figur 2 zeigt eine Leitzentrale C mit einer Nebenstellenvermittlungsanlage PABX, einem Datenbank-Rechner DB, zwei Bildschirmarbeitsplätzen OD1 und OD2 und verschiedenen dazwischenliegenden Verbindungen.

Der Datenbank-Rechner DB besteht in diesem Beispiel aus drei gleichen Einheiten, die an sich jeweils selbständig arbeiten und sich gegenseitig vertreten und absichern können. Jede dieser Einheiten ist dazu mit der Nebenstellenvermittlungsanlage PABX verbunden, vorzugsweise über mindestens eine Basisanschlußleitung für ISDN mit einer sogenannten S0-Schnittstelle.

Auch die Bildschirmarbeitsplätze OD1 und OD2 sind in gleicher Weise mit der Nebenstellenvermittlungsanlage PABX verbunden.

Außerdem sind die Nebenstellenvermittlungsanlage PABX, der Datenbank-Rechner DB und die Bildschirmarbeitsplätze OD1 und OD2 untereinander durch ein lokales Netzwerk, ein sogenanntes LAN, miteinander verbunden. Das lokale Netzwerk weist in diesem Fall noch weitere Netzkomponenten auf, die hier jedoch nicht von Bedeutung sind.

Zum Nachrichten-Wählnetz N hin ist die Nebenstellenvermittlungsanlage PABX bevorzugt mit einer ISDN-Sammelanschlußleitung, einem sogenannten Primärmultiplexanschluß S2M verbunden.

Der Datenbank-Rechner DB, die Bildschirmarbeitsplätze OD1 und OD2 und das lokale Netzwerk bilden zusammen einen Mehrplatz-Rechnerverbund bekannter Art. Die Verbindung zu den Teilnehmern erfolgt dabei in diesem Beispiel über die ISDN-Verbindungen und die Nebenstellenvermittlungsanlage PABX.

Die Wirkungsweise der Leitstelle wurde bereits anhand der Figur 1 beschrieben.

Ein zweites Ausführungsbeispiel einer erfindungsgemäßen Leitzentrale wird anhand der Figur 3 beschrieben. Figur 3 zeigt eine Leitzentrale C mit einem Datenbank-Rechner DB, zwei Bildschirmarbeitsplätzen OD1 und OD2 und verschiedenen dazwischenliegenden Verbindungen.

Gegenüber dem Ausführungsbeispiel nach Figur 2 ist hier auf eine Nebenstellenvermittlungsanlage verzichtet. Der Datenbank-Rechner DB und die zwei Bildschirmarbeitsplätze OD1 und OD2 sind dafür unabhängig voneinander mit dem Nachrichten-Wählnetz N verbunden. Das lokale Netzwerk ist etwas leistungsfähiger ausgebildet.

## Patentansprüche

1. Verfahren zur Videofernüberwachung von insbesondere Wohnungen und Büros, bei dem von einer Leitzentrale (C) aus zu einer Endeinrichtung (S1, S2, S3, ..., Sn), über die die Videofernüberwachung erfolgen soll, eine Videoverbindung aufgebaut wird, bei dem von der Endeinrichtung zur Leitzentrale ein Videobild übertragen wird und bei dem nach erfolgter Überwachung die Videoverbindung wieder ausgelöst wird, **dadurch gekennzeichnet**, **daß** der Aufbau einer Videoverbindung von der Leitzentrale aus selbständig eingeleitet wird, wenn diese aufgrund vorgegebener Regeln erkennt, daß eine Überwachung über diese bestimmte Endeinrichtung erfolgen soll.

2. Verfahren nach Anspruch 1, dadurch gekennzeichnet, daß ein Aufbau einer Videoverbindung von der Leitzentrale aus zu dieser Endeinrichtung nur dann erfolgt, wenn vorab von dieser Endeinrichtung eine Datenverbindung aufgebaut worden ist, durch die eine Anmeldung für eine nachfolgende Videofernüberwachung erfolgt ist.

3. Verfahren nach Anspruch 1, dadurch gekennzeichnet, daß ein Aufbau einer Videoverbindung von der Leitzentrale aus zu dieser Endeinrichtung aufgrund vorgegebener Regeln im zeitlichen Wechsel mit dem Aufbau von Videoverbindungen zu anderen Endeinrichtungen erfolgt.

4. Verfahren nach Anspruch 1, dadurch gekennzeichnet, daß nach dem Aufbau einer Videoverbindung zu dieser Endeinrichtung von dieser Endeinrichtung aus die Übertragung verschiedener Videobilder zur Leitzentrale erfolgt.

5. Leitzentrale (C) zur Videofernüberwachung von insbesondere Wohnungen und Büros, mit Mitteln (DB), um von der Leitzentrale aus zu einer Endeinrichtung (S1, S2, S3, ..., Sn), über die die Videofernüberwachung erfolgen soll, eine Videoverbindung aufzubauen, mit Mitteln (OD1, OD2), um in der Leitzentrale ein Videobild zu empfangen, das von der Endeinrichtung gesendet wird und mit Mitteln, um nach erfolgter Überwachung die Videoverbindung wieder auszulösen, **dadurch gekennzeichnet**, **daß** Steuermittel in der Leitzentrale vorhanden sind, die geeignet sind, den Aufbau einer Videoverbindung von der Leitzentrale aus selbständig einzuleiten, wenn aufgrund vorgegebener Regeln erkannt wird, daß eine Überwachung durch eine bestimmte Endeinrichtung erfolgen soll.
